# FASCICULE DE BREVET EUROPEEN

(11) **EP 3 691 311 B1**
(45) Date de publication et mention de la délivrance du brevet: **02.08.2023**
(21) Numéro de dépôt: 20153915.2
(22) Date de dépôt: 27.01.2020
(51) Int. Cl.: H04W 4/80, H04B 1/7163, H04B 5/00, H04M 1/72412

(54) **COMMUNICATIONS NFC ET UWB**
NFC AND UWB KOMMUNIKATIONEN
NFC AND UWB COMMUNICATIONS

(30) Priorité: 30.01.2019 FR 1900860
(43) Date de publication de la demande: 05.08.2020
(60) Demande divisionnaire: 23179928.9
(73) Titulaire: STMicroelectronics (Rousset) SAS, 13790 Rousset (FR)
(72) Inventeur: TRAMONI, Alexandre, 83330 LE BEAUSSET (FR); CHARLES, Alexandre, 13390 AURIOL (FR)
(74) Mandataire: Cabinet Beaumont

(56) Documents cités:
- EP-A1- 3 206 305
- EP-A1- 3 413 275
- ADITYA V PADAKI (SAMSUNG RESEARCH AMERICA): "Inclusion of UWB Secure Service Information Element", IEEE DRAFT; 15-18-0458-00-004Z-INCLUSION-OF-UWB-SECURE -SERVICE-INFORMATION-ELEMENT, IEEE-SA MENTOR, PISCATAWAY, NJ USA , vol. 802.15 EIR; 802.15.4z 12 septembre 2018 (2018-09-12), pages 1-8, XP068129308, Extrait de l'Internet: URL:https://mentor.ieee.org/802.15/dcn/18/ 15-18-0458-00-004z-inclusion-of-uwb-secure -service-information-element.ppt [extrait le 2018-09-12]

## Description

### Domaine technique

La présente description concerne de façon générale les circuits et systèmes électroniques et, plus particulièrement, les circuits de communication sans fil. La présente description s'applique plus particulièrement aux circuits répondant aux caractéristiques du Forum NFC (Near Field Communication Forum).

### Technique antérieure

La plupart des dispositifs équipés de fonctions de communication, par exemple les téléphones cellulaires, les terminaux de paiement, etc. sont aujourd'hui équipés de circuits capables de gérer des communications en champ proche (NFC).

La gestion de ces communications peut impliquer divers circuits du dispositif et, notamment, des circuits ou éléments sécurisés contenant des clés, fonctions, ou mécanismes d'authentification, de chiffrement, de signature, etc. pour sécuriser des échanges entre le dispositif et des dispositifs externes.

Plus récemment, on a vu apparaître des communications Ultra Large Bande (ULB) ou Ultra Wide Band (UWB) qui exploitent une antenne différente de l'antenne utilisée pour les communications NFC.

Le document EP 3 206 305 décrit un procédé pour gérer des communications entre un lecteur sans contact et un dispositif portable sans contact.

Le document EP 3 413 275 décrit un procédé pour contrôler un accès physique a un espace réservé.

### Résumé de l'invention

Il existe un besoin d'amélioration des dispositifs disposant de fonctionnalités de communication en champ proche, NFC, et de communication ultra large bande, UWB.

Un mode de réalisation pallie tout ou partie des inconvénients des dispositifs de communication NFC et UWB connus.

Un mode de réalisation prévoit de tirer profit de la présence d'un routeur NFC dans un dispositif.

Un mode de réalisation prévoit un dispositif tel que défini dans les revendications.

Un mode de réalisation prévoit une mémoire d'un routeur de communication tel que défini dans les revendications.

Un mode de réalisation prévoit un produit programme d'ordinateur tel que défini dans les revendications.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, partielle et sous forme de blocs, un mode de réalisation d'éléments d'un dispositif équipé de fonctions de communication en champ proche, NFC, et ultra large bande, UWB ;
la figure 2 est une vue plus détaillée, schématique et sous forme de blocs, du mode de réalisation de la figure 1 ;
la figure 3 représente, de façon très schématique et sous forme de blocs, un mode de réalisation d'un téléphone cellulaire équipé des fonctions décrite en figures 1 et 2 ;
la figure 4 représente, de façon très schématique, partielle et sous forme de blocs, un autre mode de réalisation d'éléments d'un dispositif équipé de fonctions de communication en champ proche, NFC, et ultra large bande, UWB ;
la figure 5 est une vue plus détaillée, schématique et sous forme de blocs, du mode de réalisation de la figure 4 ;
la figure 6 représente, de façon très schématique, partielle et sous forme de blocs, un autre mode de réalisation d'éléments d'un dispositif équipé de fonctions de communication en champ proche, NFC, et ultra large bande, UWB ; et
la figure 7 est une vue plus détaillée, schématique et sous forme de blocs, du mode de réalisation de la figure 6.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le détail des communications en champ proche ou ultra large bande, de même que les protocoles d'échange avec un élément sécurisé n'ont pas été détaillés, les modes de réalisation décrits étant compatibles avec les communications ou protocoles usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits s'appliquent à tout dispositif équipé de fonctionnalités de communication en champ proche, NFC, et de communication ultra large bande, UWB. On fait par la suite référence à un exemple d'application à un téléphone cellulaire, mais tout ce qui est décrit s'applique plus généralement à tout dispositif, portatif ou non, à source d'énergie autonome (batterie) ou non.

Dans un téléphone cellulaire, de nombreuses applications requièrent un accès à un élément sécurisé (Secure Element). Cet élément sécurisé comporte généralement un microprocesseur sécurisé. L'élément sécurisé peut être porté par différents supports, par exemple, externes tels qu'une carte SIM (Subscriber Identity Module), une carte microSD (Micro Secure Digital Card), etc., ou internes tels qu'un élément sécurisé embarqué (embeded Secure Element - eSE), un élément sécurisé intégré (integrated Secure Element - iSE), une carte intégrée (Universal Integrated Circuit Card - UICC), etc.

Dans un téléphone cellulaire (plus généralement un dispositif) équipé de fonctionnalités NFC, le téléphone comporte un routeur, module, ou circuit d'émission-réception NFC dont le rôle est d'aiguiller les communications entre l'antenne de communication en champ proche et les différentes applications hébergées par le téléphone. Par ailleurs, en cas d'applications faisant appel à un élément sécurisé, ce routeur, module ou circuit NFC est chargé d'aiguiller les échanges entre l'extérieur du dispositif et cet élément sécurisé.

Pour le fonctionnement d'applications UWB, une antenne UWB qui équipe le téléphone est reliée à un module, routeur ou circuit d'émission-réception UWB chargé d'orienter les communications UWB vers les différentes applications du téléphone.

On fera par la suite référence à un routeur NFC et à un module UWB, sachant que ces éléments peuvent être désignés indifféremment par routeur, module, circuit, etc.

Le besoin d'intégrer des fonctionnalités UWB dans les téléphones fait apparaître un besoin de partage du ou des éléments sécurisés du téléphone ou dispositif entre le module UWB et le routeur NFC.

On pourrait penser relier individuellement le routeur NFC et le module UWB à l'élément sécurisé. Toutefois, cela nécessiterait de prévoir un mécanisme d'arbitrage spécifique au niveau de l'élément sécurisé afin de gérer les potentiels conflits entre le routeur NFC et le module UWB. Par ailleurs, cela rendrait complexe une gestion éventuelle de priorités lors des accès à l'élément sécurisé.

On pourrait également penser faire transiter les échanges par un circuit ou processeur hôte qui gère habituellement les échanges entre le routeur NFC et les autres circuits du dispositif. Toutefois, cela rendrait plus complexe les échanges et occuperait de la bande passante de ce circuit hôte.

Les modes de réalisation décrits tirent leur origine d'une nouvelle analyse des besoins fonctionnels et structurels d'accès à un élément sécurisé par un module UWB par rapport à ceux d'un routeur NFC.

Selon les modes de réalisation décrits, on prévoit de tirer profit de la présence, dans un routeur NFC, de ports de communication traités par le routeur NFC pour les aiguiller vers le ou les éléments sécurisés du téléphone. Plutôt que de connecter le module UWB directement à l'élément sécurisé, on connecte celui-ci à un port du routeur NFC qu'intègre le téléphone.

Cela permet, non seulement d'économiser une connexion au niveau de l'élément sécurisé, mais également de faciliter la gestion des requêtes à cet élément sécurisé. En effet, les échanges entre le routeur NFC et les différents éléments auxquels il est relié sont gérés par une table de routage. Ainsi, les priorités entre les différentes applications et/ou circuits sont gérées par cette table de routage en fonction d'une programmation de celle-ci, en elle-même usuelle.

Les différents modes de réalisation décrits prévoient de relier le module d'émission-réception UWB au routeur d'émission-réception NFC. Les échanges entre le circuit UWB et au moins un élément sécurisé, transitent alors par ce routeur ou circuit NFC.

On fera par la suite référence, pour simplifier, à un élément sécurisé équipant le téléphone. Toutefois, tout ce qui est décrit s'applique quel que soit le nombre d'éléments sécurisés du téléphone. Ainsi, la gestion par le routeur NFC de l'aiguillage des communications entre le module UWB et le reste du téléphone peut concerner tout ou partie des éléments sécurisés de celui-ci, de préférence tous les éléments sécurisés. De même, selon un mode de réalisation préféré, le routeur NFC aiguille non seulement les échanges entre le module UWB et les éléments sécurisés, mais également les échanges entre ce module UWB et d'autres circuits du téléphone, de préférence tous les autres circuits du téléphone avec lesquels il est susceptible de communiquer. Le module UWB est alors considéré comme un périphérique connecté au routeur NFC. Cela simplifie l'intégration d'un module UWB dans des architectures de téléphones existantes.

Des modes de réalisation d'un dispositif équipé d'un module de communication ultra large bande et d'un procédé de gestion des échanges entre un module de communication ultra large bande et un élément sécurisé sont décrits par la suite.

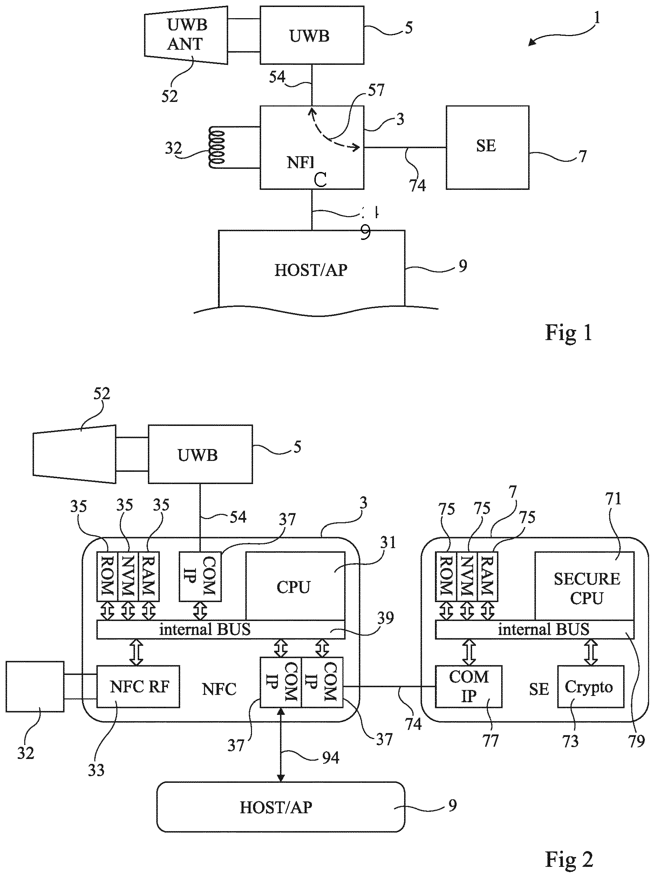

La figure 1 représente, de façon très schématique, partielle et sous forme de blocs, un mode de réalisation d'éléments d'un dispositif équipé de fonctions de communication en champ proche, NFC, et ultra large bande, UWB.

Le dispositif 1, ou téléphone, comporte un routeur 3 de communication en champ proche, NFC, relié à une antenne 32 d'émission-réception en champ proche.

Le téléphone 1 comporte également un module 5 de communication ultra large bande, UWB, relié à une antenne 52 (UWB-ANT) d'émission-réception UWB.

Dans l'exemple représenté, on suppose que le routeur 3 et le module 5 comportent chacun les circuits d'émission-réception radiofréquence, RF, respectivement NFC et UWB et les circuits de démodulation en réception et de modulation en émission requis pour les communications. Ainsi, les échanges entre le routeur 3 et le reste du téléphone, et entre le module 5 et le reste du téléphone, sont des échanges numériques.

Le téléphone 1, auquel s'appliquent les modes de réalisation décrits, comporte également au moins un élément sécurisé 7 (SE). Le téléphone 1 comporte par ailleurs un processeur ou circuit hôte dont le rôle est, entre autres, de relayer des communications entre le routeur NFC et des applications hébergées par le téléphone. Ce circuit hôte ainsi que le reste des circuits du téléphone 1 sont illustrés par un bloc 9 (HOST/AP) symbolisant les circuits et processeur maître ou hôte du téléphone ainsi que les différentes applications utilisant les communications qu'elles soient en champ proche, ultra large bande, ou qu'elles répondent à d'autres normes telles que Bluetooth, GSM, WiFi, etc. dont les circuits n'ont pas été détaillés.

Comme illustré en figure 1, un bus numérique 54 du module UWB 5 est relié, de préférence connecté, au routeur NFC 3. La nature du bus 54 dépend de l'application et du ou des bus et protocoles que supporte le port du routeur NFC 3 auquel est relié le module 5. Il s'agit, par exemple, d'un bus parallèle, d'un bus série de type SWP (Single Wire Protocol), d'un bus série de type I2C (Inter-Integrated Circuit), etc. De préférence, le bus 54 est un bus série de type SPI (Serial Peripheral Interface). Ainsi, le module UWB n'est pas relié directement au circuit hôte 9, ni à l'élément sécurisé 3. Toute transaction entre le module 5 et l'un des circuits du téléphone transite par le routeur 3.

Le routeur 3 est par ailleurs relié, de préférence connecté, à l'élément sécurisé 7 par un bus numérique 74. La nature du bus 74 dépend de l'application et du ou des bus et protocoles que supporte le port de l'élément sécurisé 7 auquel est relié le routeur 3. Il s'agit, par exemple, d'un bus parallèle, d'un bus série de type SPI (Serial Peripheral Interface), d'un bus série de type I2C (Inter-Integrated Circuit), etc. De préférence, le bus 74 est un bus série de type SPI (Single Wire Protocol).

Le routeur 3 est également relié, de préférence connecté, au circuit hôte 9, par un bus numérique 94. La nature du bus 94 dépend de l'application et du ou des bus et protocoles que supporte le port du circuit hôte 9 auquel est relié le routeur 3. Il s'agit, par exemple, d'un bus parallèle, d'un bus série de type SPI (Serial Peripheral Interface), d'un bus série de type SWP (Single Wire Protocol), etc. De préférence, le bus 94 est un bus série de type I2C (Inter-Integrated Circuit).

Bien que cela n'ait pas été représenté aux figures par souci de simplification, le routeur 3 peut être relié à d'autres circuits du téléphone 1 qu'il s'agisse d'autres éléments sécurisés ou de circuits ayant d'autres fonctions.

Selon les modes de réalisation décrits, tout échange (symbolisé par une liaison en pointillés 57 en figure 1) entre le module UWB 5 et l'élément sécurisé 7 transite par le routeur NFC 3, sans passer par le circuit hôte 9 du téléphone 1.

Ainsi, les échanges entre le module UWB 5 et le circuit hôte 9, et plus généralement tout échange entre le module 5 et le reste du téléphone 1, transitent par le routeur NFC 3.

La figure 2 est une vue plus détaillée, schématique et sous forme de blocs, du mode de réalisation de la figure 1.

Selon ce mode de réalisation, le routeur NFC 3, le module UWB 5 et l'élément sécurisé 7 sont des circuits intégrés distincts, de préférence montés sur une même plaquette de circuit imprimé (Printed Circuit Board - PCB).

Dans l'exemple représenté, le routeur NFC 3 comporte au moins :
- une unité centrale de traitement 31 (CPU) ou microprocesseur ;
- une tête 33 ou circuit d'émission-réception radiofréquence en champ proche (NFC RF) reliée, de préférence connectée, à l'antenne 32 ;
- une ou plusieurs mémoires 35, parmi lesquelles une ou plusieurs mémoires mortes (ROM) et/ou une ou plusieurs mémoires non volatiles réinscriptibles (NVM) et/ou une ou plusieurs mémoires vives (RAM) ;
- des ports internes 37 (COM IP) de communication (d'interface de communication) avec différents circuits reliés au routeur 3 ; et
- un ou plusieurs bus internes 39 (Internal BUS) par lequel ou lesquels transitent les échanges entre les différentes constituants du routeur 3.

Fonctionnellement, le routeur 3 contient une table de routage qui est, par exemple, stockée en mémoire non volatile, NVM, et qui contient les paramètres d'aiguillage des différents échanges entre les circuits et applications reliées au routeur 3.

Dans l'exemple de la figure 2, trois ports 37 sont respectivement reliés, de préférence connectés, au module UWB 5 (bus 54), à l'élément sécurisé 7 (bus 74) et au circuit hôte 9 (bus 94).

Dans l'exemple représenté, l'élément sécurisé, SE, 7 comporte au moins :
- une unité centrale de traitement sécurisée 71 (SECURE CPU) ou microprocesseur sécurisé ;
- un module ou processeur cryptographique 73 (CRYPTO), chargé de mettre en oeuvre, de façon sécurisée, les mécanismes d'authentification et/ou de chiffrement et/ou de signature en fonction de la nature de l'élément sécurisé 7 ;
- une ou plusieurs mémoires 75, parmi lesquelles une ou plusieurs mémoires mortes (ROM) et/ou une ou plusieurs mémoires non volatiles réinscriptibles (NVM) et/ou une ou plusieurs mémoires vives (RAM) ;
- au moins un port interne 77 (COM IP) de communication (d'interface de communication) avec le routeur 3 (bus 74) ; et
- un ou plusieurs bus internes 79 (Internal BUS) par lequel ou lesquels transitent les échanges entre les différentes constituants de l'élément 7.

Bien que cela n'ait pas été détaillé aux figures, le module UWB 5 comporte généralement le même type de circuit que le routeur 3, à savoir, unité centrale de traitement, mémoires, bus interne, circuit d'émission-réception radiofréquence (ici ultra large bande) et ports internes de communication.

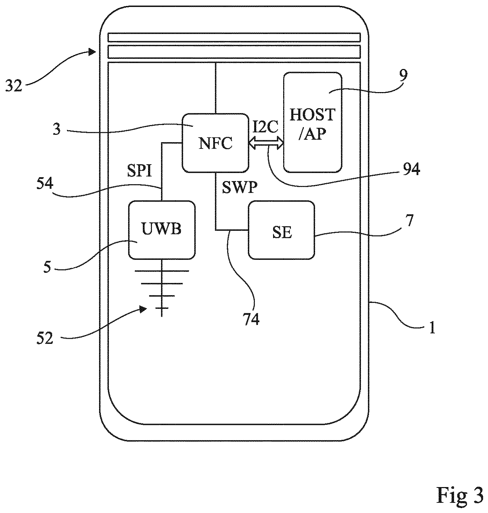

La figure 3 représente, de façon très schématique et sous forme de blocs, un mode de réalisation d'un téléphone cellulaire 1 équipé des fonctions décrites en figures 1 et 2.

Cette figure reprend, symboliquement les différents circuits représentés en figure 1, à savoir :
- un bloc 3 illustrant le routeur de communication en champ proche (NFC) ;
- un bloc 5 illustrant le module de communication ultra large bande (UWB) ;
- un bloc 7 illustrant l'élément sécurisé (SE) ;
- un bloc 9 illustrant le ou les circuits hôte 9 (HOST/AP) ;
- un antenne 32 de communication en champ proche, généralement associée à une antenne GSM ;
- une antenne 52 de communication ultra large bande UWB ; et
- des bus 54, 74 et 94, respectivement dans cet exemple SPI, SWP et I2C, de communication entre le routeur 3 et respectivement le module 5, l'élément 7 et le circuit 9.

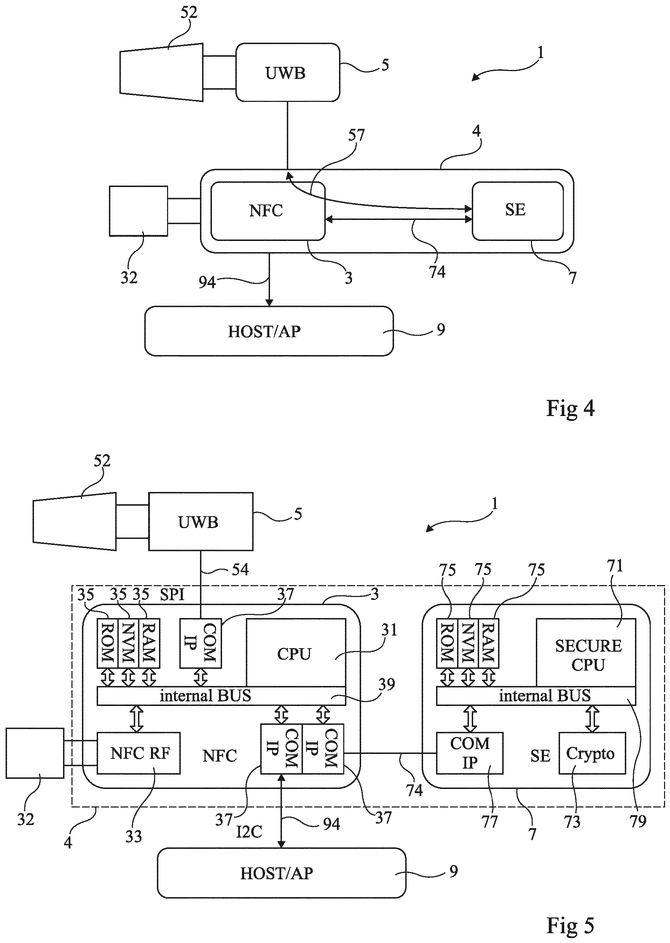

La figure 4 représente, de façon très schématique, partielle et sous forme de blocs, un autre mode de réalisation d'éléments d'un dispositif équipé de fonctions de communication en champ proche, NFC, et ultra large bande, UWB.

Le mode de réalisation de la figure 4 reprend les constituants de la figure 1, à la différence près que le routeur de communication en champ proche 3 (NFC) et l'élément sécurisé 7 (SE) du téléphone 1 sont tous les deux intégrés dans un même circuit 4. Le reste des éléments est similaire à ceux décrits en relation avec la figure 1.

La figure 5 est une vue plus détaillée, schématique et sous forme de blocs, du mode de réalisation de la figure 4.

La figure 5 transpose, au mode de réalisation de la figure 4, les détails décrits en relation avec la figure 2 pour le mode de réalisation de la figure 1.

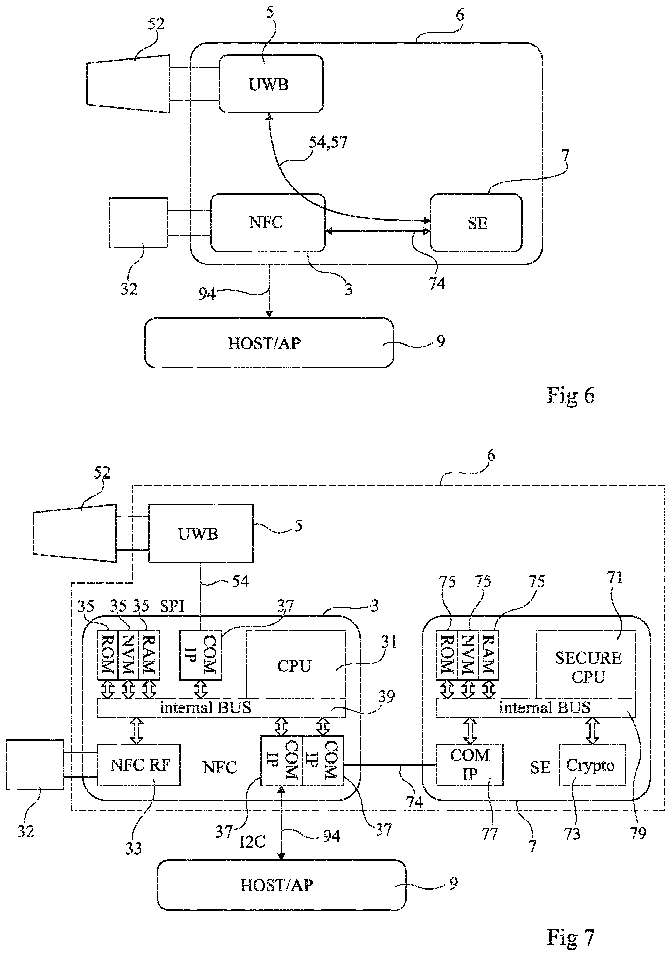

La figure 6 représente, de façon très schématique, partielle et sous forme de blocs, un autre mode de réalisation d'éléments d'un dispositif équipé de fonctions de communication en champ proche, NFC, et ultra large bande, UWB.

Le mode de réalisation de la figure 6 reprend les constituants de la figure 1, à la différence près que le routeur de communication en champ proche 3 (NFC), le module de communication ultra large bande 5 (UWB) et l'élément sécurisé 7 (SE) du téléphone 1 sont tous les trois intégrés dans un même circuit 6. Le reste des éléments est similaire à ceux décrits en relation avec la figure 1.

La figure 7 est une vue plus détaillée, schématique et sous forme de blocs, du mode de réalisation de la figure 6.

La figure 7 transpose, au mode de réalisation de la figure 6, les détails décrits en relation avec la figure 2 pour le mode de réalisation de la figure 1.

Un avantage des modes de réalisation décrits est que la gestion de communication UWB est particulièrement simple dans la mesure où, quel que soit le circuit (élément sécurisé, circuit hôte, etc.) du téléphone destinataire ou émetteur de la transaction, tout transite par le routeur NFC.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, le choix entre les différents modes de réalisation dépend de l'architecture du téléphone.

Enfin, la mise en oeuvre pratique des modes de réalisation et variantes décrits est à la portée de l'homme du métier à partir des indications fonctionnelles données ci-dessus. En particulier, la gestion des échanges entre le routeur NFC, le module UWB et l'élément sécurisé est programmable sans difficulté au niveau des circuits du téléphone. Par exemple, on peut prévoir que l'élément sécurisé est prioritairement alloué aux applications NFC et que le routeur NFC passe la main au module UWB une fois qu'il a terminé ses propres échanges avec l'élément sécurisé. De plus, la gestion des échanges peut être effectuée d'après un paramétrage d'une table de routage contenue sous forme de table ou sous forme d'instruction dans le routeur de communication en champ proche. De même, la mise en oeuvre des mécanismes décrits sous forme logicielle peut faire appel à un programme d'ordinateur (ou produit programme d'ordinateur) comprenant des instructions pour mettre en oeuvre le procédé de gestion décrit.

## Revendications

1. Dispositif compris dans un téléphone cellulaire, comportant au moins :
- un module de communication en champ proche (3) ;
- un module de communication ultra large bande (5) ;
- un circuit hôte (9) adapté pour relayer des communications entre le module de communication en champ proche et des applications hébergées par le téléphone cellulaire ; et
- un élément sécurisé (7),
et dans lequel :
le module de communication en champ proche est relié au module de communication ultra large bande par un premier bus numérique (54) et à l'élément sécurisé par un deuxième bus numérique (74), distincts d'un troisième bus (94) reliant le module de communication en champ proche au circuit hôte, et
le module de communication ultra large bande (5) constitue un périphérique du module de communication en champ proche de sorte que le module de communication en champ proche est adapté pour que les échanges entre le module de communication ultra large bande et l'élément sécurisé transitent par le module de communication en champ proche, sans passer par le circuit hôte (9).

2. Dispositif selon la revendication 1, comportant en outre une antenne ultra large bande (52) à laquelle est relié, de préférence connecté, le module de communication ultra large bande (5).

3. Dispositif selon la revendication 1 ou 2, comportant en outre une antenne de communication en champ proche (32) à laquelle est relié, de préférence connecté, le module de communication en champ proche (3).

4. Dispositif selon l'une quelconque des revendications 1 à 3, dans lequel le module de communication en champ proche est adapté à ce que les échanges entre le module de communication ultra large bande (5) et tout circuit relié au module de communication en champ proche (3) transitent par ledit module de communication en champ proche.

5. Dispositif selon l'une quelconque des revendications 1 à 4, dans lequel le module de communication en champ proche (3), le module de communication ultra large bande (5) et l'élément sécurisé (7) sont des circuits intégrés distincts.

6. Dispositif selon l'une quelconque des revendications 1 à 5, dans lequel le module de communication en champ proche (3) et l'élément sécurisé (7) font partie d'un même circuit intégré (4).

7. Dispositif selon l'une quelconque des revendications 1 à 5, dans lequel le module de communication en champ proche (3), le module de communication ultra large bande (5) et l'élément sécurisé (7) font partie d'un même circuit intégré (6).

8. Téléphone cellulaire (1) comportant un dispositif selon l'une quelconque des revendications 1 à 7.

9. Procédé, mis en oeuvre dans un téléphone cellulaire, de gestion d'échanges entre un module de communication ultra large bande (5) et un élément sécurisé (7), dans lequel lesdits échanges transitent par un module de communication en champ proche (3) sans passer par un circuit hôte (9) dont le rôle est de relayer des communications entre le module de communication en champ proche et des applications hébergées par le téléphone cellulaire.

10. Procédé selon la revendication 9, dans lequel les échanges entre le module de communication ultra large bande (5) et tout circuit relié au module de communication en champ proche (3) transitent par ledit module de communication en champ proche.

11. Procédé selon la revendication 9 ou 10, dans lequel le module de communication en champ proche (3), le module de communication ultra large bande (5) et l'élément sécurisé (7) sont des circuits intégrés distincts.

12. Procédé selon la revendication 9 ou 10, dans lequel le module de communication en champ proche (3) et l'élément sécurisé (7) font partie d'un même circuit intégré (4).

13. Procédé selon la revendication 9 ou 10, dans lequel le module de communication en champ proche (3), le module de communication ultra large bande (5) et l'élément sécurisé (7) font partie d'un même circuit intégré (6).

14. Mémoire d'un module de communication en champ proche (3) contenant des instructions qui, lorsqu'elles sont exécutées par le module de communication en champ proche, conduisent celui-ci à mettre en oeuvre le procédé selon l'une quelconque des revendications 9 à 13.

15. Produit programme d'ordinateur comprenant des instructions qui, lorsque le programme est exécuté par un ordinateur, conduisent celui-ci à mettre en oeuvre le procédé selon l'une quelconque des revendications 9 à 13.

## Patentansprüche

1. Vorrichtung, die in einem Mobiltelefon enthalten ist, wobei die Vorrichtung mindestens Folgendes aufweist:
- ein Nahfeld-Kommunikationsmodul (3);
- ein Ultrabreitband-Kommunikationsmodul (5);
- eine Host-Schaltung (9), die eingerichtet ist, um Kommunikationen zwischen dem Nahfeld-Kommunikationsmodul und Anwendungen, die in dem Mobiltelefon gehostet werden, weiterzuleiten; und
- ein Sicherheitselement (7),
und wobei:
das Nahfeld-Kommunikationsmodul mit dem Ultrabreitband-Kommunikationsmodul durch einen ersten digitalen Bus (54) und mit dem Sicherheitselement durch einen zweiten digitalen Bus (74) gekoppelt ist, der sich von einem dritten Bus (94) unterscheidet, der das Nahfeld-Kommunikationsmodul mit der Host-Schaltung koppelt, und
das Ultrabreitband-Kommunikationsmodul (5) eine Peripherie des Nahfeld-Kommunikationsmoduls bildet, so dass das Nahfeld-Kommunikationsmodul eingerichtet ist, so dass die Austauschvorgänge zwischen dem Ultrabreitband-Kommunikationsmodul und dem Sicherheitselement durch das Nahfeld-Kommunikationsmodul laufen, ohne durch die Host-Schaltung (9) zu laufen.

2. Vorrichtung nach Anspruch 1, die ferner eine Ultrabreitband-Antenne (52) aufweist, an die das Ultrabreitband-Kommunikationsmodul (5) gekoppelt, vorzugsweise angeschlossen, ist.

3. Vorrichtung nach Anspruch 1 oder 2, die ferner eine Nahfeld-Kommunikationsantenne (32) enthält, an die das Nahfeld-Kommunikationsmodul (3) gekoppelt, vorzugsweise angeschlossen ist.

4. Vorrichtung nach einem der Ansprüche 1 bis 3, wobei das Nahfeld-Kommunikationsmodul so eingerichtet ist, dass die Austauschvorgänge zwischen dem Ultrabreitband-Kommunikationsmodul (5) und jeder mit dem Nahfeld-Kommunikationsmodul (3) gekoppelten Schaltungen durch das Nahfeld-Kommunikationsmodul laufen.

5. Vorrichtung nach einem der Ansprüche 1 bis 4, wobei das Nahfeld-Kommunikationsmodul (3), das Ultrabreitband-Kommunikationsmodul (5) und das Sicherheitselement (7) unterschiedliche integrierte Schaltungen sind.

6. Vorrichtung nach einem der Ansprüche 1 bis 5, wobei das Nahfeld-Kommunikationsmodul (3) und das Sicherheitselement (7) einen Teil einer gleichen integrierten Schaltung (4) bilden.

7. Vorrichtung nach einem der Ansprüche 1 bis 5, wobei das Nahfeld-Kommunikationsmodul (3), das Ultrabreitband-Kommunikationsmodul (5) und das Sicherheitselement (7) einen Teil einer gleichen integrierten Schaltung (6) bilden.

8. Mobiltelefon (1), das eine Vorrichtung nach einem der Ansprüche 1 bis 7 enthält.

9. Verfahren, das in einem Mobiltelefon implementiert ist, um Austauschvorgänge zwischen einem Ultrabreitband-Kommunikationsmodul (5) und einem Sicherheitselement (7) zu verwalten, **dadurch gekennzeichnet, dass** die Austauschvorgänge ein Nahfeld-Kommunikationsmodul (3) durchlaufen, ohne eine Host-Schaltung (9) zu durchlaufen, deren Funktion darin besteht, Kommunikationen zwischen dem Nahfeld-Kommunikationsmodul und Anwendungen, die in dem Mobiltelefon gehostet werden, zu übertragen.

10. Verfahren nach Anspruch 9, wobei die Austauschvorgänge zwischen dem Ultrabreitband-Kommunikationsmodul (5) und jeder mit dem Nahfeld-Kommunikationsmodul (3) gekoppelten Schaltungen durch das Nahfeld-Kommunikationsmodul laufen.

11. Verfahren nach Anspruch 9 oder 10, wobei das Nahfeld-Kommunikationsmodul (3), das Ultrabreitband-Kommunikationsmodul (5) und das Sicherheitselement (7) unterschiedliche integrierte Schaltungen sind.

12. Verfahren nach Anspruch 9 oder 10, wobei das Nahfeld-Kommunikationsmodul (3) und das Sicherheitselement (7) einen Teil einer gleichen integrierten Schaltung (4) bilden.

13. Verfahren nach Anspruch 9 oder 10, wobei das Nahfeld-Kommunikationsmodul (3), das Ultrabreitband-Kommunikationsmodul (5) und das Sicherheitselement (7) einen Teil einer gleichen integrierten Schaltung (6) bilden.

14. Speicher eines Nahfeld-Kommunikationsmoduls (3), der Anweisungen speichert, die, wenn sie von dem Nahfeld-Kommunikationsmodul ausgeführt werden, letzteres veranlassen, das Verfahren nach einem der Ansprüche 9 bis 13 durchzuführen.

15. Computerprogrammprodukt, das Anweisungen aufweist, die, wenn das Programm von einem Computer ausgeführt wird, letzteren veranlassen, das Verfahren nach einem der Ansprüche 9 bis 13 durchzuführen.

## Claims

1. Device included in a cellular phone, including at least:
- a near field communication module (3);
- an ultra-wide band communication module (5);
- a host circuit (9) adapted to pass communications between the near field communication module and applications hosted in the cellular phone; and
- a secure element (7),
and wherein:
the near field communication module is coupled with the ultra-wide band communication module by a first digital bus (54), and with the secure element by a second digital bus (74), distinct from a third bus (94) coupling the near field communication module to the host circuit, and
the ultra-wide band communication module (5) forms a peripheral of the near field communication module such that the near field communication module is adapted so that the exchanges between the ultra-wide band communication module and the secure element transit through the near field communication module, without transiting through the host circuit (9).

2. Device according to claim 1, further including an ultra-wide band antenna (52) having the ultra-wide band communication module (5) coupled, preferably, connected, thereto.

3. Device according to claim 1 or 2, further including near field communication antenna (32) having the near field communication module (3) coupled, preferably connected, thereto.

4. Device according to any of claims 1 to 3, wherein the near field communication module is adapted to what the exchanges between the ultra-wide band communication module (5) and any circuit coupled to the near field communication module (3) transit through said near field communication module.

5. Device according to any of claims 1 to 4, wherein the near field communication module (3), the ultra-wide band communication module (5), and the secure element (7) are distinct integrated circuits.

6. Device according to any of claims 1 to 5, wherein the near field communication module (3) and the secure element (7) form part of a same integrated circuit (4).

7. Device according to any of claims 1 to 5, wherein the near field communication module (3), the ultra-wide band communication module (5), and the secure element (7) form part of a same integrated circuit (6).

8. Cellular phone (1) including one device according to any of claims 1 to 7.

9. Method implemented in a cellular phone, of managing exchanges between an ultra-wide band communication module (5) and a secure element (7), wherein said exchanges transit through a near-field communication module (3) without transiting through a host circuit (9) the function of which consists in passing communications between the near field communication module and applications hosted in the cellular phone.

10. Method according to claim 9, wherein the exchanges between the ultra-wide band communication module (5) and any circuit coupled to the near field communication module (3) transit through said near field communication module.

11. Method according to claim 9 or 10, wherein the near field communication module (3), the ultra-wide band communication module (5), and the secure element (7) are distinct integrated circuits.

12. Method according to claim 9 or 10, wherein the near field communication module (3) and the secure element (7) form part of a same integrated circuit (4).

13. Method according to claim 9 or 10, wherein the near field communication module (3), the ultra-wide band communication module (5), and the secure element (7) form part of a same integrated circuit (6).

14. Memory of a near field communication module (3) storing instructions causing, when executed by the near field communication module, the latter to implement the method according to any of claims 9 to 13.

15. Computer program product comprising instructions causing, when the program is executed by a computer, the latter to implement the method according to any of claims 9 to 13.
